## Europäisches Patentamt
## European Patent Office
## Office européen des brevets

(19)

(11) Veröffentlichungsnummer: **0 210 406**
**B1**

(12)

# EUROPÄISCHE PATENTSCHRIFT

(45) Veröffentlichungstag der Patentschrift: **25.10.89**

(21) Anmeldenummer: **86108271.7**

(22) Anmeldetag: **18.06.86**

(51) Int. Cl.⁴: **B 60 Q 1/20, F 21 M 3/08**

(54) Scheinwerfer für Kraftfahrzeuge.

(30) Priorität: **31.07.85 DE 3527391**

(43) Veröffentlichungstag der Anmeldung: **04.02.87 Patentblatt 87/6**

(45) Bekanntmachung des Hinweises auf die Patenterteilung: **25.10.89 Patentblatt 89/43**

(84) Benannte Vertragsstaaten: **DE FR GB IT SE**

(56) Entgegenhaltungen: **GB-A-890 072**

(73) Patentinhaber: **ROBERT BOSCH GMBH, Postfach 50, D-7000 Stuttgart 1 (DE)**

(72) Erfinder: **Perthus, Peter, Artusweg 21, D-7000 Stuttgart 30 (DE)**

LIBER, STOCKHOLM 1989

## Beschreibung

Die Erfindung betrifft einen Scheinwerfer für Kraftfahrzeuge nach der Gattung des Anspruchs 1. Sind Nebelscheinwerfer an der Frontpartie des Fahrzeugs sehr hoch, z. B. 1 Meter, angeordnet, so trifft bei der gesetzlich vorgeschriebenen Einstellung des Scheinwerfers die Hell-Dunkel-Grenze des ausgesandten Lichtbündels ungefähr 50 Meter vor dem Fahrzeug auf die Fahrbahn. Die vertikale Ausdehnung des Lichtbündels reicht dann nicht aus, um den Bereich der Fahrbahn bis zur Hell-Dunkel-Grenze, insbesondere das Umfeld der Fahrbahn unmittelbar vor dem Fahrzeug, genügend auszuleuchten. Um diesen Nachteil zu beheben, sind an der Lichtscheibe zusätzlich stark vertikalbrechende optische Mittel erforderlich, die einen erhöhten technischen Fertigungsaufwand bedingen.

Ein gattungsgemäßer Scheinwerfer ist bereits aus der GB-A-890 072 bekannt. Dieser Scheinwerfer weist einen Reflektor auf, der aus zwei gleichen, symmetrisch zu einer durch die optische Achse und einer zu dieser senkrecht verlaufenden Geraden gebildeten Mittelebene angeordneten Hälften besteht. Bei dem Reflektor ist in einer Vertikalebene des Reflektors eine Ellipse vorgegeben und in einer senkrecht zur Vertikalebene verlaufenden Horizontalebene ist eine Parabel vorgegeben. Die Parabel durchstößt eine Ebene, in der die Lichtaustrittsöffnung des Reflektors liegt, in zwei Punkten, durch die eine Achse definiert wird. Die beiden Reflektorhälften entstehen nun durch die Drehung der Parabel um die Achse, wobei der Scheitelpunkt jeder gedrehten Parabel auf der Ellipse liegt und jede Parabel die die Achse in den beiden Punkten schneidet, so daß jede gedrehte Parabel eine unterschiedliche Brennweite aufweist.

## Vorteile der Erfindung

Mit dem Scheinwerfer für Kraftfahrzeuge nach der Erfindung wird das vorstehend dargelegte Problem mit technisch einfachen Mitteln gelöst. Der Erfindung liegt der Gedanke zugrunde, den das Vorfeld ausleuchtenden Lichtbündel-Abschnitt bereits durch die Konfiguration des zugehörigen Reflektor-Abschnittes die erforderliche Brechung/Streuung nach unten zu geben. Außerdem erreicht man ein Rohlichtbündel mit einem konzentrierten Kern, der erforderlich ist, um nach der horinzontalen Streuung eine ausgeprägte Hell-Dunkel-Grenze zu erhalten.

Vorteilhafte Weiterbildungen der Erfindung sind in den Unteransprüchen beschrieben. Mit Anspruch 2 ist die gesamte Reflektorflache stufenlos herstellbar.

## Zeichnung

Ein Ausführungsbeispiel ist in der Zeichnung dargestellt und in folgender Figurenbeschreibung naher erläutert. Es zeigen jeweils in vereinfachter, nichtmaßstäblicher Darstellung:

Figur 1 einen Nebelscheinwerfer für Kraftfahrzeuge in Vertikalschnitt;

Figur 2 die Frontansicht nur des Reflektors in Richtung Pfeil II in Figur 1;

Figur 3 die durch den Reflektor erzeugte Rohlichtverteilung auf einem Meßschirm; und

Figur 4 das von der Lichtscheibe beeinflußte Lichtbündel auf einem Meßschirm.

## Beschreibung des Ausführungsbeispieles

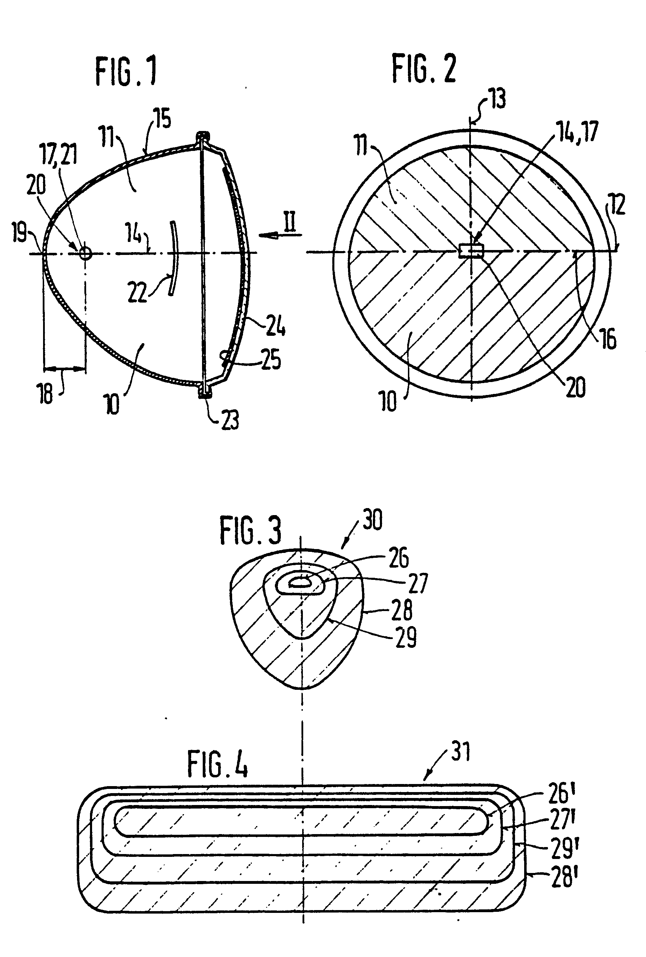

Der Reflektor eines Nebelscheinwerfers für Kraftfahrzeuge in den Figuren 1 und 2 besteht aus einem unteren Abschnitt 10 und einem oberen Abschnitt 11, die beide sich in der horizontalen Mittelebene 12 des Reflektors 10, 11 berühren. Die vertikale Mittelebene 13 und die horizontale Mittelebene 12 schneiden sich in der optischen Achse 14. Der untere Abschnitt 10 des Reflektors 10, 11 ist Teil eines Paraboloides und der obere Abschnitt 11 ist eine Reflexionsfläche, deren Vertikalschnitt (Schnitt entlang der vertikalen Mittelebene 13) Teil einer Ellipse 15 ist und deren Horizontalschnitt (Schnitt entlang der horizontalen Mittelebene 12) Teil einer Parabel 16 ist. Der Brennpunkt 17 des Reflektors 10, 11 ist identisch jeweils mit dem Brennpunkt des den unteren Abschnitt 10 bildenden Paraboloides und der Parabel 16 sowie der Ellipse 15. Die jeweilige Brennweite des Paraboloides 10 und der Ellipse 15 sowie der Parabel 16 sind ebenfalls identisch, so daß der Reflektor eine einzige Brennweite 18 (Abstand des Brennpunktes 17 Vom Reflektorscheitel 19) aufweist.

Ein Leuchtkörper 20 (Lichtquelle) ist als zylindrische Glühwendel ausgeführt, deren Zylinderachse 2 rechtwinklig und waagrecht zur optischen Achse 14 angeordnet ist. Der Brennpunkt 17 des Reflektors 10, 11 liegt dabei innerhalb des Leuchtkörpers 20. Eine kreisflächenförmige Blende 22 schirmt die direkten (von Reflektor 10, 11 nicht reflektierten) Lichtstrahlen ab. Die Austrittsöffnung 23 des Reflektors 10, 11 verschließt eine Lichtscheibe 24, an deren Innenseite optische Mittel 25 angeformt sind, welche die hindurchtretenden Lichtstrahlen horizontal streuen.

Die vom Leuchtkörper 20 erzeugten und von Reflektor 10, 11 reflektierten Lichtstrahlen bilden ohne die Lichtscheibe 24 auf einem rechtwinklig zur optischen Achse 14 angeordneten Meßschirm (identisch mit der Zeichnungsebene) ein Rohlichtbündel 30. Von diesen sind vier Isoluxlinie 26 bis 20 (Linien gleicher Licht starke eingezeichnet. Bezüglich dem durch die Lichtstrahlen innerhalb der Isoluxlinie 26 gebildeten Lichtschwerpunkt hat der untere Bereich des Rohlichtbündels gegenüber den oberen Bereich eine vielfach größere vertikale Ausdehnung; hierdurch wird insbesondere das Vorfeld der Fahrbahn ausreichend ausgeleuchtet.

Die horizontal streuenden optischen Mittel 25 (Figur 1) an der Lichtscheibe 24 streuen das hindurchtretende Rohlichtbündel 30 (Figur 2) mit den Isoluxlinien 26' bis 29', das auf dem vorbeschriebenen Meßschirm die in Figur 4 dargestellte Konfiguration einnimmt. Die horizontale Ausdehnung des Lichtbündels 31 ist bei derart, daß vor allem die Seitenausleuchtung, d. h. die Beleuchtung beider Fahrbahnrande ausreichend erfolgt.

## Patentansprüche

1. Scheinwerfer für Kraftfahrzeuge mit einem Reflektor, der zumindest abschnittsweise in einem Schnitt in der vertikalen Mittelebene des Reflektors Teil einer Ellipse (15) und in einem Schnitt in der horizontalen Mittelebene des Reflektors Teil einer Parabel (16) ist, wobei der Brennpunkt der Parabel (16) mit dem der Ellipse (15) zusammenfällt, im Brennpunkt eine Lichtquelle (20) angeordnet ist und der Reflektor von einer Lichtscheibe (24) abgedeckt wird, dadurch gekennzeichnet, daß der Abschnitt (10) des Reflektors unterhalb dessen horizontaler Mittelebene (12) ein Teil eines Paraboloides ist und daß der Abschnitt (11) des Reflektors oberhalb dessen horizontaler Mittelebene (12) eine Reflexionsfläche ist, die die Ellipse (15) und die Parabel (16) aufweist, wobei die Brennpunkte des Paraboloides, der Parabel (16) und der Ellipse (15) identisch sind und den Brennpunkt des Reflektors bilden.

2. Scheinwerfer nach Anspruch 1, dadurch gekennzeichnet, daß die Brennweite des Paraboloides und die der Parabel (16) sowie die der Ellipse (15) identisch sind und die Brennweite (18) des Reflektors (10, 11) bilden.

3. Scheinwerfer nach einem der vorgenannten Ansprüche, dessen Lichtquelle ein im Bereich des Brennpunktes angeordnet er zylindrischer Leuchtkörper ist, dadurch gekennzeichnet, daß die Zylinderachse (21) des Leuchtkörpers (20) rechtwinklig und waagrecht zur optischen Achse (14) des Scheinwerfers angeordnet ist und daß der Brennpunkt (17) innerhalb des Leuchtkörpers (20) liegt.

## Claims

1. Headlight for motor vehicles having a reflector which is at least by sections part of an ellipse (15) in a section in the vertical median plane of the reflector and part of a parabola (16) in a section in the horizontal median plane of the reflector, the focal point of the parabola (16) coinciding with that of the ellipse (15), a light source (20) being arranged in the focal point and the reflector being covered by a transparent disc (24), characterized in that the section (10) of the reflector below its horizontal median plane (12) is part of a paraboloid and that the section (11) of the reflector above its horizontal median plane (12) is a reflecting surface which exhibits the ellipse (15) and the parabola (16), the focal points of the paraboloid, of the parabola (16) and of the ellipse (15) being identical and forming the focal point of the reflector.

2. Headlight according to Claim 1, characterized in that the focal length of the paraboloid and that of the parabola (16) and that of the ellipse (15) are identical and form the focal length (18) of the reflector (10, 11).

3. Headlight according to one of the previous Claims, the light source of which is a cylindrical luminous body arranged in the region of the focal point, characterized in that the cylindrical axis (21) of the luminous body (20) is arranged at right angles and horizontally to the optical axis (14) of the headlight, and that the focal point (17) is located inside the luminous body (20).

## Revendications

1. Projecteur pour véhicules automobiles, avec un réflecteur, dont au moins en partie, la coupe par le plan médian vertical du réflecteur est une partie d'ellipse (15) et la coupe par le plan médian horizontal du réflecteur est une parabole (16), le foyer de la parabole (16) coïncide avec le foyer de l'ellipse (15), et une source lumineuse (20) est placé au foyer et le réflecteur est fermé par une glace (24), caractérisé en ce que la partie (10) du réflecteur en dessous de son plan médian horizontal (12) est une partie de paraboloïde et que la partie (11) du réflecteur au dessus de son plan médian horizontal (12) est une surface réfléchissante qui présente l'ellipse (15) et la parabole (16), les foyers du paraboloïde, de la parabole (16) et de l'ellipse (15) étant confondus et forment le foyer du réflecteur.

2. Projecteur selon la revendication 1 caractérisé en ce que la distance focale du paraboloïde et celle de la parabole (16) ainsi que celle de l'ellipse (15) sont identiques et qu'elles constituent la distance focale (18) du réflecteur (10, 11).

3. Projecteur selon l'une quelconque des revendications précédentes, dont la source lumineuse est un corps lumineux cylindrique disposé dans la zone du foyer, caractérisé en ce que l'axe cylindrique (21) du corps lumineux (20) est perpendiculaire et horizontal par rapport à l'axe optique (14) du projecteur et que le foyer (17) est placé à l'intérieur du corps lumineux (20).

## FIG.1

## FIG.2

## FIG.3

## FIG.4